# FASCICULE DE BREVET EUROPEEN

(11) **EP 1 979 230 B1**
(45) Date de publication et mention de la délivrance du brevet: **07.03.2012**
(21) Numéro de dépôt: 07704198.6
(22) Date de dépôt: 29.01.2007
(51) Int. Cl.: B64C 1/22

(54) **AÉROPLANE COMPORTANT UN POSTE DE PILOTAGE**
FLUGZEUG MIT EINEM COCKPIT
AIRPLANE COMPRISING A FLIGHT DECK

(30) Priorité: 30.01.2006 FR 0650324
(43) Date de publication de la demande: 15.10.2008
(73) Titulaire: AIRBUS OPERATIONS (S.A.S), 31060 Toulouse (FR)
(72) Inventeur: GUERING, Bernard, F-31850 Montrabe (FR)
(74) Mandataire: Schmit, Christian Norbert Marie
(86) Numéro de dépôt international: PCT/EP2007/050844
(87) Numéro de publication internationale: WO 2007/085655

(56) Documents cités:
- FR-A1- 2 667 042
- US-A- 2 403 595
- US-A- 2 447 665
- US-B1- 6 497 388

## Description

La présente invention concerne un aéroplane comportant un poste de pilotage. L'invention vise notamment un avion transporteur pour le transport de fret spécial, volumineux et/ou lourd, en particulier de composants destinés à l'assemblage d'aéronefs tels que des ailes d'avion, mais aussi des machines industrielles, des hélicoptères entiers, de l'aide humanitaire, ...

On connaît des avions transporteurs pour le transport de fret encombrant tel que des sections de fuselage ou des composants de station spatiale. Un tel avion, le Beluga par exemple, assure le transport de fret des différents sites de fabrication d'un constructeur aéronautique vers le site d'assemblage final afin d'y construire l'avion complet. Voir, pour exemple, le document FR 2 667 042.

Bien qu'un tel avion puisse être dérivé d'un avion existant, la conception d'un avion transporteur requiert de nouvelles études et des développements en vue de réaliser un avion cargo de forte capacité. En particulier, le volume utile pour recevoir le fret doit considérablement être augmenté tout en maintenant l'aérodynamisme et la stabilité directionnelle nécessaire à l'avion cargo.

Ces études et développements nécessitent la mobilisation d'efforts considérables en terme de moyens techniques, de personnels qualifiés et de coûts pour un constructeur.

Le développement d'une pointe avant et l'intégration des systèmes avioniques sont notamment techniquement difficiles et coûteux.

Il serait également avantageux de disposer d'un avion de transport de fret disposant d'une capacité de transport supérieure aux avions cargos connus en raison des besoins croissants pour un acheminement rapide de matériels et/ou de composants de grandes dimensions avec des coûts de transport réduits.

Par ailleurs, sur un avion multi-moteurs dont les moteurs sont disposés sous ou sur la voilure, le fuselage se décompose en trois parties distinctes. Une première partie placée à l'avant comprend la cabine de pilotage, différentes soutes et enfin une pointe avant. Cette pointe abrite le radar dont l'antenne est recouverte par un radôme. Le fuselage comprend aussi une partie centrale qui sert de cabine pour les passagers ou de soute pour les bagages ou le fret et à laquelle sont fixées les ailes. Enfin, il comprend une partie arrière de forme conique, généralement monobloc, sur laquelle viennent se raccorder les empennages horizontaux et verticaux.

Or la cabine de pilotage n'est généralement séparée de la partie centrale que par une simple cloison comportant une porte pour en barrer l'accès.

La pressurisation du poste de pilotage est assurée par le système réalisant la pressurisation du reste de l'avion et en particulier, de la partie centrale.

A ce titre, le poste de pilotage ne constitue pas un module indépendant.

L'objectif de la présente invention est donc de proposer un poste de pilotage, simple dans sa conception et dans son mode opératoire, économique, pressurisable indépendamment du reste de l'avion et constituant ainsi un module autonome.

Un autre objet de la présente invention est un aéroplane particulièrement simple et peu onéreux, dont le poste de pilotage est un module autonome inséré partiellement dans un fuselage élémentaire présentant une grande capacité de transport.

L'invention permet ainsi à partir d'un tronçon avant d'avion de ligne développé et industrialisé de réaliser un module autonome intégrable à un fuselage basique via un nombre de points discrets pour fournir un avion cargo de grande capacité.

A cet effet, l'invention concerne un aéroplane selon la revendication 1.

Selon l'invention, le poste de pilotage comporte une paroi étanche obturant un tronçon hermétiquement et un système de pressurisation pour pressuriser le tronçon.

On entend par "tronçon avant d'aéroplane", une partie avant tronquée ne comportant ni le radar ni le radôme recouvrant l'antenne du radar. Ce tronçon est toutefois entièrement équipé des moyens nécessaires pour assurer le vol d'un avion et, en particulier, d'un système de commande de vol électrique comportant des calculateurs. Il est également aménagé.

Dans différents modes de réalisation particuliers de ce poste de pilotage, chacun ayant ses avantages particuliers et susceptibles de nombreuses combinaisons techniques possibles:
- la paroi est sensiblement plane et comporte des organes d'attache destinés à recevoir des pièces de fixation du tronçon sur un fuselage,
Le tronçon comporte par ailleurs des organes d'attache à l'avant sur sa partie tronquée. Ces organes d'attache sont à titre purement illustratif des oreilles pourvues d'un orifice.
- le système de pressurisation comprend au moins un régulateur de pression relié à une unité de commande, une vanne de décharge actionnée par un moteur recevant des signaux de l'unité de commande,
- il comporte un système de commande de vol électrique comprenant des calculateurs reliés à des sorties qui sont placées sur la paroi, ces sorties étant destinées à recevoir des liaisons vers des organes de commande d'un aéronef tels que des servo-commandes,
- ces sorties sont aptes à recevoir des liaisons électriques ou des fibres optiques,
- la paroi comporte un élément d'accès à l'intérieur du tronçon, cet élément d'accès étant étanche lorsqu'il est en position fermée,
- le poste comporte des panneaux de plancher comprenant chacun au moins un rail de montage pour l'aménagement du poste.
Ces panneaux de plancher délimitent la partie supérieure d'une soute avionique dans laquelle sont placés les moyens électroniques et informatiques permettant le contrôle des différents organes de l'avion et en particulier des servo-commandes de l'aéroplane. Ces panneaux de plancher permettent également l'installation d'aménagements intérieurs à la cabine tels que des sièges, offices ("galleys"), toilettes, ...

Avantageusement, le rail de montage est réalisé dans un matériau répondant aux critères de résistance mécanique et de résistance à la corrosion liés à des applications dans le domaine aéronautique. Il s'agit, par exemple, du titane ou d'un alliage d'aluminium.

L'invention concerne également un aéroplane ayant un fuselage creux au moins dans sa partie avant.

Selon l'invention, cet aéronef comporte un poste de pilotage tel que décrit précédemment partiellement inséré dans un orifice placé dans la partie supérieure avant du fuselage. Ce poste de pilotage est solidarisé à ce fuselage par des moyens de solidarisation.

Avantageusement, cet orifice a une forme permettant d'assurer une continuité aérodynamique entre le fuselage et le poste de pilotage partiellement inséré pour éviter une pénétration de l'air dans le fuselage.

En effet, le carénage de l'ensemble ainsi obtenu permet un écoulement de l'air qui évite la formation de turbulences à la jonction entre le fuselage et le poste de pilotage, lesdites turbulences pouvant autrement favoriser la pénétration d'air à l'intérieur du fuselage.

De préférence, le fuselage comprend au moins deux poutres transversales placées respectivement à l'avant et à l'arrière du tronçon. Les moyens de solidarisation comprennent des organes de fixation du tronçon à ces poutres et au moins quatre bielles de renfort inclinées reliées latéralement par paire par une de leurs extrémités à l'avant et à l'arrière du tronçon et à leur autre extrémité auxdites poutres par une liaison rotule.

Enfin, l'invention concerne un avion transporteur. Selon l'invention, cet avion est un aéroplane tel que décrit précédemment, le fuselage présentant un volume intérieur utile de dimension longitudinale supérieure à 35 m et de hauteur supérieure à 8 m.

L'invention sera décrite plus en détail en référence aux dessins annexés dans lesquels:
- la figure 1 représente en vue partielle la partie avant du fuselage d'un aéroplane selon un mode de réalisation de l'invention, un poste de pilotage étant inséré dans ce fuselage et solidarisé à celui-ci;

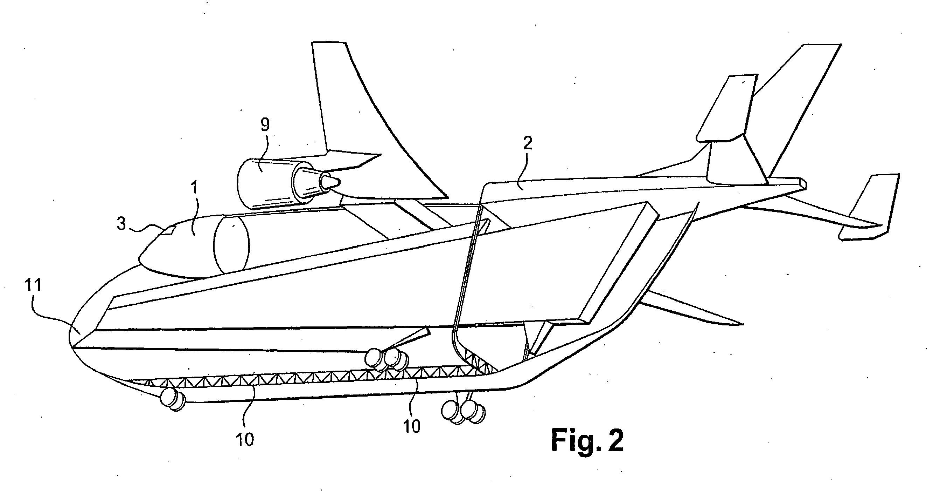

- la figure 2 est une vue en perspective d'un aéroplane selon un mode de réalisation de l'invention, le fuselage de cet aéroplane apparaissant partiellement en coupe;
- la figure 3 est une représentation schématique en perspective de l'aéroplane de la Figure 1;

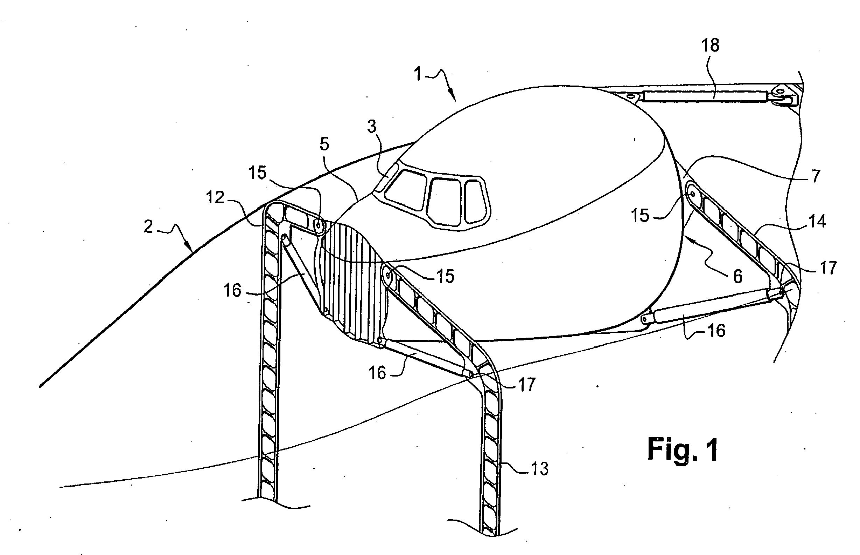

La Figure 1 montre un poste de pilotage 1 selon un mode de réalisation particulier de l'invention inséré dans un orifice réalisé dans la partie supérieure avant du fuselage 2 d'un avion. Ce poste de pilotage 1 comprend un tronçon avant d'aéroplane avec son pare-brise 3.

Le poste de pilotage est solidarisé au fuselage 2 des moyens de solidarisation 4. L'orifice 5 a une forme permettant avantageusement d'assurer une continuité aérodynamique entre le fuselage 2 et le poste de pilotage 1 partiellement inséré pour éviter une pénétration de l'air dans le fuselage.

Ce poste 1 comporte une paroi étanche 6 obturant ce tronçon hermétiquement et un système de pressurisation pour pressuriser ce tronçon. Cette paroi 6 est de préférence sensiblement plane et comporte des organes d'attache 7 tels que des oreilles pour la fixation du poste 1 sur le fuselage 2 au moyen d'organes de fixation.

La paroi 6 comporte un élément d'accès à l'intérieur du tronçon, cet élément d'accès étant étanche lorsqu'il est en position fermée. Cet élément d'accès est une porte par exemple.

Cette paroi est de plus réalisée dans un matériau répondant aux critères de résistance mécanique et de résistance à la corrosion liés aux applications dans le domaine aéronautique. En effet, cette paroi doit résister aux contraintes mécaniques inhérentes à la pressurisation du poste de pilotage 1 et à une éventuelle non pressurisation du volume utile de transport du fuselage de l'avion.

Le matériau retenu pour réaliser la paroi est choisi dans le groupe comprenant le dural, l'acier, des alliages d'aluminium ou autre.

Le système de pressurisation du poste de pilotage comprend avantageusement deux régulateurs numériques de pression, lesquels sont indépendants et identiques. Ils sont chacun reliés à une unité de commande comprenant un calculateur assurant la régulation automatique de la pression du poste de pilotage. Une unité de commande et son régulateur forme un circuit de secours, l'autre ensemble constituant le circuit de pressurisation actif.

Bien entendu, cette régulation peut être réalisée manuellement par le pilote.

Le système comporte une vanne de décharge actionnée par un moteur. Un signal indiquant la position ouverte ou fermée de cette vanne est envoyé à l'unité de commande du circuit actif. Le moteur est apte à recevoir des signaux de changement d'état de la vanne de l'unité de commande.

Ce système de pressurisation comporte enfin au moins une soupape de sécurité pneumatique pour éviter l'apparition d'une pression différentielle excessive.

Le poste de pilotage 1 est équipé d'un système de commande vol électrique permettant avantageusement de s'affranchir du difficile couplage au moyen de liaisons mécaniques (câbles et/ou biellettes, renvois, poulies, ...) entre le poste de pilotage et les gouvernes lors de l'intégration du poste de pilotage au fuselage.

Le système de commande de vol électrique comprenant des calculateurs, ces derniers sont reliés à des sorties placées sur ladite paroi. Ces sorties sont destinées à recevoir des liaisons vers les organes de commande de l'avion tels que des servo-commandes.

Ces sorties sont aptes à recevoir des liaisons électriques ou des fibres optiques. Les fibres optiques peuvent être monomodes ou multimodes permettant de transporter les signaux sur une plus grande distance au sein de l'avion tout en s'assurant d'une immunité aux interférences électriques. Alternativement, il peut encore s'agir d'une liaison filaire de type Ethernet.

L'avion comporte un fuselage 2 creux auquel sont reliés des ailes 8, des moteurs 9 et des freins. La partie avant de ce fuselage ne comporte pas de cabine de pilotage mais un corps creux. L'ensemble du corps de l'avion peut également être creux, il ne comporte alors que des éléments de renfort nécessaires tels que des poutres 10 et des éléments de plancher.

A la pointe avant 11 de ce fuselage est disposé un radar dont l'antenne est recouverte d'un radôme laissant passer les ondes radar.

Le fuselage 2 comprend deux paires de demi poutres 12, 13, 14 placées chacune à l'avant et à l'arrière du tronçon. Chaque demi-poutre 12, 13, 14 est placée latéralement au tronçon. Il comprend aussi une poutre de renfort placée en arrière des deux demi poutres 14 placées à l'arrière du tronçon avant.

Les moyens de solidarisation comprennent des organes de fixation 15 du tronçon à ces demi poutres et pour chaque demi poutre, une bielle de renfort 16 inclinée reliée latéralement par une de ses extrémités au tronçon et à son autre extrémité à ces demi poutres par une liaison rotule 17. Les organes de fixation 15 sont par exemple des rivets.

Ces moyens comprennent également une bielle bloquant le mouvement avant/arrière du tronçon 18, cette bielle étant reliée à une de ses extrémités à la partie supérieure arrière du tronçon et à son autre extrémité à la poutre de renfort.

Ces demi poutres 12, 13, 14 et poutre sont avantageusement des poutres treillis permettant l'accès au poste de pilotage.

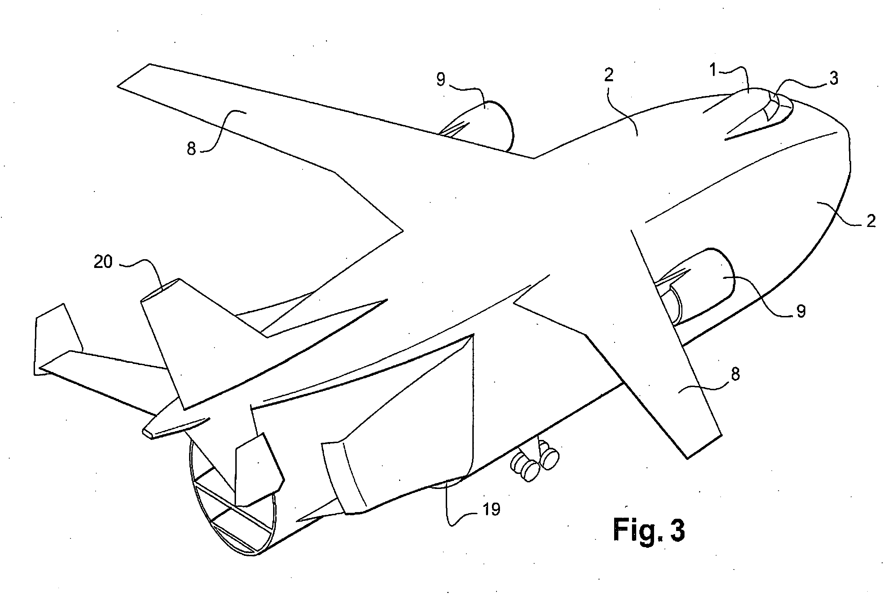

Le fuselage de l'avion comporte avantageusement une porte arrière de dimension verticale supérieure à 9 m pour l'accès au volume intérieur de l'aéroplane. Cette porte sur la Figure 3 est une porte qui comporte deux panneaux 19, 20 susceptibles de s'écarter l'un de l'autre pour laisser libre accès au volume intérieur de l'avion par ouverture manuelle ou au moyen d'un élément de commande motorisé relié éventuellement au poste de pilotage.

## Revendications

1. Aéroplane ayant un fuselage (2) creux au moins dans sa partie avant, **caractérisé en ce qu'**il comporte
- un poste de pilotage (1) comprenant un tronçon avant d'aéroplane, une paroi étanche (6) obturant ledit tronçon hermétiquement et un système de pressurisation pour pressuriser ledit tronçon,
- ladite paroi (6) étant sensiblement plane et comportant des organes d'attache (7) destinés à recevoir des organes de fixation (15) dudit tronçon sur un fuselage,
- ledit poste de pilotage étant partiellement inséré dans un orifice (5) placé dans la partie supérieure avant dudit fuselage (2) et solidarisé audit fuselage par des moyens de solidarisation (12-16), et **en ce que**
- ledit fuselage comprenant au moins deux poutres transversales placées respectivement à l'avant et à l'arrière dudit tronçon, lesdits moyens de solidarisation comprennent des organes de fixation (15) dudit tronçon auxdites poutres et au moins quatre bielles de renfort (12-14) inclinées reliées latéralement par paire par une de leurs extrémités à l'avant et à l'arrière dudit tronçon (1) et à leur autre extrémité auxdites poutres par une liaison rotule.

2. Aéroplane selon la revendication 1, **caractérisé en ce que** ledit système de pressurisation comprend au moins un régulateur de pression relié à une unité de commande, une vanne de décharge actionnée par un moteur, ledit moteur recevant des signaux de ladite unité de commande.

3. Aéroplane selon la revendication 1 ou 2, **caractérisé en ce que** comportant un système de commande de vol électrique comprenant des calculateurs, ces calculateurs sont reliés à des sorties placées sur ladite paroi, lesdites sorties étant destinées à recevoir des liaisons vers des organes de commande d'un aéronef tels que des servo-commandes.

4. Aéroplane selon la revendication 3, **caractérisé en ce que** lesdites sorties sont aptes à recevoir des liaisons électriques ou des fibres optiques.

5. Aéroplane selon l'une quelconque des revendications 1 à 4, **caractérisé en ce que** ladite paroi (6) comporte un élément d'accès à l'intérieur dudit tronçon, ledit élément d'accès étant étanche lorsqu'il est en position fermée.

6. Aéroplane selon l'une quelconque des revendications 1 à 5, **caractérisé en ce que** ledit orifice (5) a une forme permettant d'assurer une continuité aérodynamique entre ledit fuselage (2) et ledit poste de pilotage (1) partiellement inséré pour éviter une pénétration de l'air dans le fuselage.

7. Aéroplane selon la revendication 6, **caractérisé en ce que** ledit fuselage (2) présentant une poutre placée en arrière de ladite poutre reliée à l'arrière dudit tronçon, les moyens de solidarisation comprennent une bielle (18) bloquant le mouvement avant/arrière dudit tronçon (1), cette bielle (18) étant reliée à la partie supérieure dudit tronçon.

8. Aéroplane selon l'une quelconque des revendications 1 à 7, **caractérisé en ce que** lesdites poutres(12-14) sont des poutres treillis permettant l'accès audit poste de pilotage.

9. Aéroplane selon l'une quelconque des revendications 1 à 8, **caractérisé en ce que** la pointe (11) avant dudit fuselage (2) comprend un radar.

10. Aéroplane selon l'une quelconque des revendications 1 à 9, **caractérisé en ce que** ledit fuselage (2) comporte une porte arrière (19,20) de dimension verticale supérieure à 9 m pour l'accès au volume intérieur dudit aéroplane.

11. Avion transporteur, **caractérisé en ce que** ledit avion est un aéroplane selon l'une quelconque des revendications 1 à 10 et **en ce que** ledit fuselage présente un volume intérieur utile de dimension longitudinale supérieure à 35 m et de hauteur supérieure à 8 m.

## Claims

1. An aeroplane with a fuselage (2), hollow in at least its front part, **characterised in that** it comprises
- a flight deck (1) comprising an aeroplane front section, a leak-tight wall (6) hermetically sealing off said section and a pressurisation system for pressurising said section,
- said wall (6) being substantially flat and comprising attachment members (7) intended to receive fixing members (15) for fixing said section onto a fuselage,
- said flight deck being partially inserted into an orifice (5) placed in the front upper part of said fuselage (2) and connected to said fuselage by connection means (12-16), and **in that**
- said fuselage comprising at least two transversal beams respectively placed to the front and rear of said section, said connection means comprise fixing members (15) for fixing said section to said beams and at least four inclined reinforcing rods (12-14) connected laterally per pair by one of their ends to the front and rear of said section (1) and by the other end to said beams by a ball joint link.

2. An aeroplane according to claim 1, **characterised in that** said pressurisation system comprises at least one pressure regulator connected to a control unit, one unloader valve activated by an engine, said engine receiving signals from said control unit.

3. An aeroplane according to claim 1 or 2 **characterised in that**, comprising an electric flight control system including computers, these computers are connected to outlets placed on said wall, said outlets being intended to receive links to the control members of an aircraft such as servo-controls.

4. An aeroplane according to claim 3, **characterised in that** said outlets are capable of receiving electric links or optical fibres.

5. An aeroplane according to any one of claims 1 to 4, **characterised in that** said wall (6) comprises an access element within said section, said access element being leak-tight when in its closed position.

6. An aeroplane according to any one of claims 1 to 5, **characterised in that** said orifice (5) has a shape creating aerodynamic continuity between said fuselage (2) and said partially inserted flight deck (1) so as to prevent air from penetrating into the fuselage.

7. An aeroplane according to claim 6 **characterised in that**, said fuselage (2) presenting a beam placed to the rear of said beam connected to the rear of said section, the connection means comprise a rod (18) blocking the forward/backward movement of said section (1), this rod (18) being connected to the upper part of said section.

8. An aeroplane according to any one of claims 1 to 7, **characterised in that** said beams (12-14) are lattice beams enabling access to said flight deck.

9. An aeroplane according to any one of claims 1 to 8, **characterised in that** the front point (11) of said fuselage (2) comprises a radar.

10. An aeroplane according to any one of claims 1 to 9, **characterised in that** said fuselage (2) comprises a rear door (19, 20) with a vertical dimension exceeding 9 m for access to the inner volume of said aeroplane.

11. A transport aircraft, **characterised in that** said aircraft is an aeroplane according to any one of claims 1 to 10 and **in that** said fuselage has a useful inner volume with a longitudinal dimension exceeding 35 m and with a height exceeding 8 m.

## Patentansprüche

1. Flugzeug, das zumindest in seinem vorderen Abschnitt einen hohlen Rumpf (2) umfasst, **dadurch gekennzeichnet, dass** es folgendes enthält
- ein Cockpit (1) umfassend einen vorderen Flugzeugabschnitt, eine dichte Wand (6), die den besagten Abschnitt hermetisch abdichtet und ein Druckausgleichsystem für den Druckausgleich im besagten Abschnitt,
- wobei die besagte Wand (6) in etwa eben ist, und Befestigungsorgane (7) umfasst, die dazu bestimmt sind, die Fixierungsorgane (15) des besagten Abschnitts auf einem Rumpf aufzunehmen,
- und das besagte Cockpit teilweise in eine Öffnung (5) eingefügt ist, die in einem vorderen oberen Abschnitt des besagten Rumpfes (2) angeordnet, und durch Befestigungsmittel (12-16) fest mit besagten Rumpf verbunden ist, und dadurch, dass
- die besagten Befestigungsmittel, da der besagte Rumpf zumindest zwei Querträger umfasst, die jeweils vorne und hinten im besagten Abschnitt angeordnet sind, Befestigungsorgane (15) des besagten Abschnitts an den besagten Trägern umfassen, sowie zumindest vier geneigte Verstrebungsgestänge (12-14), die seitlich paarweise an jeweils einem ihrer Enden vorne oder hinten mit dem besagten Abschnitt (1), und mit ihrem anderen Ende über eine Kugelgelenkverbindung mit den besagten Trägern verbunden sind.

2. Flugzeug nach Anspruch 1, **dadurch gekennzeichnet, dass** das besagte Druckausgleichsystem zumindest einen Druckregler umfasst, der an eine Steuerungseinheit angeschlossen ist, ein Luftablassventil, das von einem Motor angesteuert wird, wobei der besagte Motor die Signale von der besagten Steuerungseinheit erhält.

3. Flugzeug nach Anspruch 1 oder 2, **dadurch gekennzeichnet, dass** da es ein elektrisches Flugsteuerungssystem mit Rechnern enthält, diese Rechner mit Ausgängen verbunden sind, die an der besagten Wand angeordnet sind, und die besagten Ausgänge dazu bestimmt sind, Verbindungen zu Steuerungsorganen eines Luftfahrzeugs, wie Servosteuerungen aufzunehmen.

4. Flugzeug nach Anspruch 3, **dadurch gekennzeichnet, dass** die besagten Ausgänge in der Lage sind, elektrische Verbindungen oder Lichtwellenleiter aufzunehmen.

5. Flugzeug nach irgendeinem oder Ansprüche 1 bis 4, **dadurch gekennzeichnet, dass** die besagte Wand (6) ein Zugangselement ins Innere des besagten Abschnittes umfasst, wobei das besagte Zugangselement in seiner geschlossenen Stellung dicht ist.

6. Flugzeug nach irgendeinem der Ansprüche 1 bis 5, **dadurch gekennzeichnet, dass** die besagte Öffnung (5) eine Form aufweist, die es ermöglicht, für eine aerodynamische Kontinuität zwischen dem besagten Rumpf (2) und dem besagten Cockpit (1) zu sorgen, das teilweise eingefügt ist, um ein Eindringen der Luft in den Rumpf zu vermeiden.

7. Flugzeug nach Anspruch 6, **dadurch gekennzeichnet, dass** die Befestigungsorgane, da der besagte Rumpf (2) einen Träger umfasst, der hinter dem besagten Träger angeordnet ist, der mit dem hinteren Teil des besagten Abschnitts verbunden ist, eine Kurbelstange (18) umfasst, die die Vorwärts-/ Rückwärtsbewegung des besagten Abschnitts (1) blockiert, wobei die besagte Kurbelstange (18) mit dem oberen Teil des besagten Abschnitts verbunden ist.

8. Flugzeug nach irgendeinem der Ansprüche 1 bis 7, **dadurch gekennzeichnet, dass** die besagten Träger (12-14) Fachwerkträger sind, die den Zutritt zum besagten Cockpit ermöglichen.

9. Flugzeug nach irgendeinem der Ansprüche 1 bis 8, **dadurch gekennzeichnet, dass** die vordere Spitze (11) des besagten Rumpfes (2) einen Radar umfasst.

10. Flugzeug nach irgendeinem der Ansprüche 1 bis 9, **dadurch gekennzeichnet, dass** der besagte Rumpf (2) eine rückwärtige Türe (19, 20) mit einer senkrechten Abmessung von über 9 Metern für den Zutritt ins Innenvolumen des besagten Flugzeugs umfasst.

11. Transportflugzeug, **dadurch gekennzeichnet, dass** das besagte Flugzeug ein Flugzeug nach irgendeinem der Ansprüche 1 bis 10 ist und dadurch, dass der besagte Rumpf ein Innennutzvolumen mit einer Länge von über 35 Metern und einer Höhe von über 8 Metern umfasst.
